Europäisches Patentamt

European Patent Office

Office européen des brevets

(19)

(11) Veröffentlichungsnummer: **0 216 058
B1**

(12) **EUROPÄISCHE PATENTSCHRIFT**

(45) Veröffentlichungstag der Patentschrift:
**31.10.90**

(51) Int. Cl.⁵: **A01C 17/00**

(21) Anmeldenummer: **86109974.5**

(22) Anmeldetag: **21.07.86**

(54) Maschine zum Ausbringen von körnigem Material.

(30) Priorität: **20.09.85 DE 3533586**

(43) Veröffentlichungstag der Anmeldung:
**01.04.87 Patentblatt 87/14**

(45) Bekanntmachung des Hinweises auf die Patenterteilung:
**31.10.90 Patentblatt 90/44**

(84) Benannte Vertragsstaaten:
**FR GB IT NL SE**

(56) Entgegenhaltungen:
**FR-A- 2 124 282
FR-A- 2 553 251**

(73) Patentinhaber: **Amazonen-Werke H. Dreyer GmbH & Co. KG, Am Amazonenwerk 9-13,
D-4507 Hasbergen-Gaste(DE)**

(72) Erfinder: **Dreyer, Heinz, Dr. Dipl.-Ing., Am Amazonenwerk 7, D-4507 Hasbergen(DE)**

**Beschreibung**

Die Erfindung betrifft eine Maschine zum Ausbringen von körnigem Material gemäß des Oberbegriffes des Patentanspruches 1.

Eine derartige Maschine ist durch die deutsche Offenlegungsschrift 33 37 762 bekannt.

Diese Maschine zeichnet sich dadurch aus, daß der Vorratsbehälter in vier Behälterspitzen aufgeteilt ist, so daß die Gleichmäßigkeit der Ausbringmenge überprüft werden kann. Da bei der bekannten Maschine die Behälterspitzen jedoch nur sehr klein sind, ist es hier erst möglich, die Gleichmäßigkeit der Ausbringmenge pro Schleuderscheibe zu überprüfen, wenn nur noch sehr wenig Material in dem Vorratsbehälter enthalten ist.

Von Vorteil ist hier jedoch noch, daß der bekannte Vorratsbehälter in sich symmetrisch ist. Dadurch, daß der Vorratsbehälter eine doppelte Spiegelbildlichkeit aufweist, kann in einfacher Weise - jedoch erst wenn sehr wenig Material nur noch in dem Vorratsbehälter vorhanden ist - überprüft werden, ob zu jeder Auslauföffnung die gleiche Menge Material zugeführt wird bzw, auf jeder Seite der Arbeitsbreite die gleiche Menge Material ausgebracht wird.

Der Erfindung liegt nun die Aufgabe zugrunde, den Vorratsbehälter hinsichtlich des Aufnahmevolumens und der Kontrollmöglichkeit während der gesamten Zeit, über welche das Material aus dem Vorratsbehälter ausgebracht wird, zumindest für jeweils zwei Trichterspitzen gemeinsam optimal zu gestalten.

Diese Aufgabe wird erfindungsgemäß durch das Kennzeichen des Anspruches 1 gelöst.

Infolge dieser Maßnahmen ergeben sich praktisch zwei nebeneinander angeordnete Vorratsbehälter mit jeweils zwei Trichterspitzen, wobei die beiden Vorratsbehälterhälften zu der Mittellängsachse spiegelbildlich sind. Somit kann die Gleichmäßigkeit der Zuführung bzw. die Gleichmäßigkeit des Ausbringens des Materials durch die verschiedenen Dosierorgane, die im unteren Bereich der Trichterspitzen angeordnet sind, bereits bei vollem Vorratsbehälter überprüft werden. Dieses läßt sich dadurch erreichen, daß der mittlere dachförmige Teil bis nach oben gezogen ist bzw. der mittlere dachförmige Teil relativ klein ausgebildet ist, sich aber dann an den mittleren dachförmigen Teil eine Trennwand anschließt, die bis nach oben reicht.

In einer bevorzugten Ausführungsform ist erfindungsgemäß vorgesehen, daß die Seitenlänge des mittleren dachförmigen Teiles zumindest um das Eineinhalbfache länger ist als die Seitenlänge der äußeren dachförmigen Teile. Des weiteren sieht die Erfindung vor, daß die Seitenlänge des inneren dachförmigen Teiles der Seitenlänge der beiden äußeren schrägen Seitenwände des Vorratsbehälters entspricht.

Schließlich ist noch bei einer Maschine, bei der sich an dem oberen Rand des Vorratsbehälters ein aus Verlängerungsstücken bestehender Vorratsbehälter anschließt, dessen Behälterwände geneigt verlaufen, erfindungsgemäß vorgesehen, daß die Behälterwände derart von unten schräg nach oben außen verlaufen, daß sie in gleicher Richtung wie die Wände des trichterförmigen Vorratsbehälters geneigt verlaufen. Hierdurch wird ein Aufsatzbehälter für Vorratsbehälter geschaffen, der hinsichtlich des zusätzlichen Aufnahmevolumens optimal gestaltet ist. Aufgrund der schräg nach außen oben verlaufenden Wände des Aufsatzbehälters ergibt sich ein trichterförmiger Aufsatzbehälter, so daß das zusätzlich durch den Aufsatzbehälter geschaffene Aufnahmevolumen erheblich größer ist, als wenn die Wände des Aufsatzbehälters senkrecht verlaufen würden. In einer bevorzugten Ausführungsform ist hierbei vorgesehen, daß die Behälterwände des Aufsatzbehälters etwa unter der gleichen Neigung wie die des Vorratsbehälters schräg nach oben verlaufen.

Weitere Einzelheiten sind den übrigen Unteransprüchen, den Beispielsbeschreibungen und den Zeichnungen zu entnehmen. Hierbei zeigen

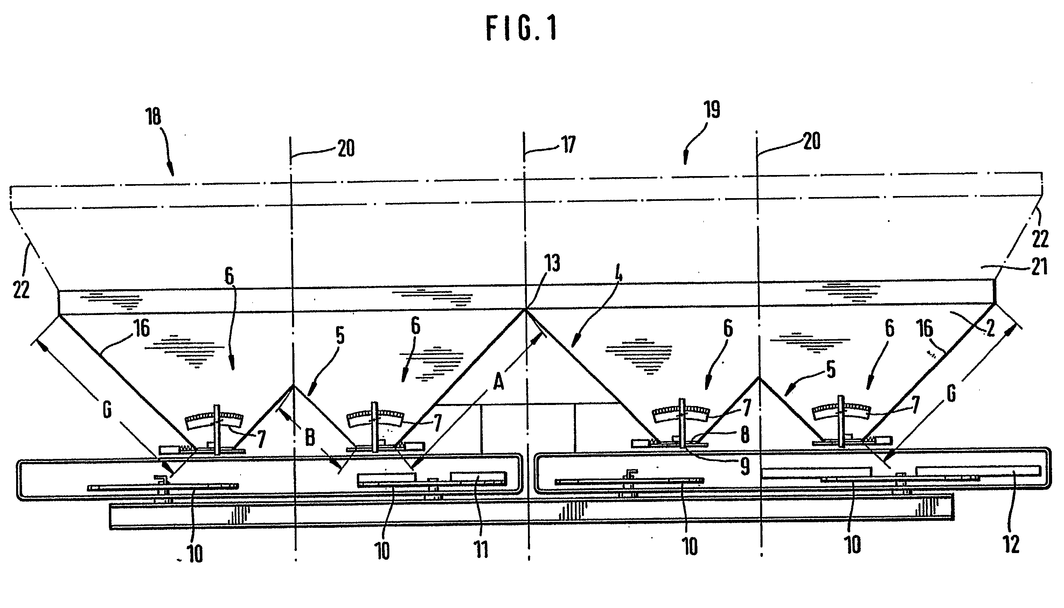

Fig. 1 einen erfindungsgemäß ausgebildeten Schleuderstreuer in der Ansicht von hinten und

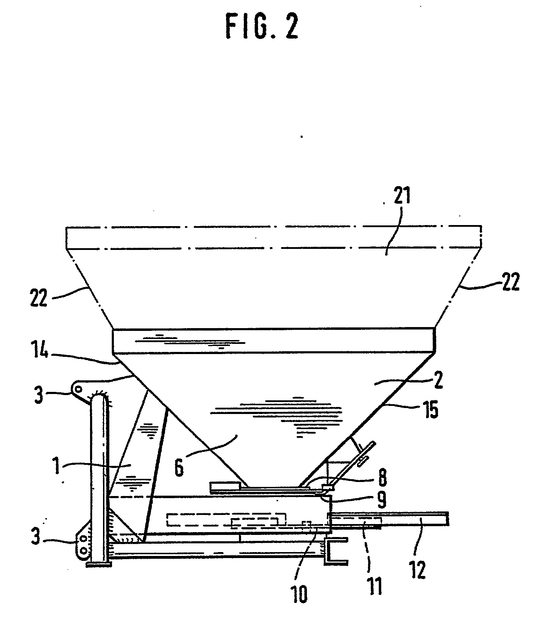

Fig. 2 den Schleuderstreuer in der Seitenansicht.

Die Maschine zum Ausbringen von körnigem Material ist als Schleuderstreuer ausgestattet. Der Schleuderstreuer weist den Rahmen 1 und den Vorratsbehälter 2 auf. Mit Hilfe der auf der Vorderseite des Rahmens 1 angeordneten Kupplungselementen 3 wird der Schleuderstreuer in bekannter und daher nicht dargestellter Weise an den Dreipunktheber eines Schleppers angebaut. Der untere Bereich des Vorratsbehälters 2 ist durch das mittlere dachförmige Teil 4 und die beiden äußeren dachförmigen Teile 5 in vier Behälterspitzen 6 mit den Trichterspitzen 7 aufgeteilt. Jede Trichterspitze 7 weist eine ebene Grundplatte 8 auf, in der Auslauföffnungen angebracht sind. Unterhalb der Grundplatten 8 befindet sich jeweils ein als Schieber ausgebildetes Verschlußelement 9, mit dem die Größe der Auslauföffnungen 9 jeweils unabhängig voneinander einzustellen ist bzw. mit dem die Auslauföffnungen jeweils unabhängig voneinander zu verschließen sind. Die Verschlußelemente 9 sind unabhängig voneinander über eine nicht dargestellte Fernbedienung zu betätigen. In den unteren Bereichen der Trichterspitzen 7 ist eine nicht dargestellte horizontal verlaufende und angetriebene Rührwelle angeordnet. Diese Rührwelle ist in den Wandteilen der Trichterspitzen gelagert und abgedichtet. Weiterhin ragt die Rührwelle in sämtliche Trichterspitzen hinein.

Unterhalb der Auslauföffnungen, die sich in den Trichterspitzen 7 befinden, sind jeweils die als Schleuderscheiben 10 ausgebildeten Verteileinrichtungen angeordnet, wobei jeder Trichterspitze 7 eine Schleuderscheibe 10 zugeordnet ist. Die beiden inneren Schleuderscheiben 10 sind mit den kurzen Wurfelementen 11 ausgerüstet, während auf den äußeren Schleuderscheiben 10 die längeren Wurfelemente 12 angeordnet sind. Die Schleuderscheiben 10 werden über ein Zahnradgetriebe von der Schlepperzapfwelle aus angetrieben, so daß die Schleuderscheiben 10 um ihre aufrechten Achsen rotieren. Die Schleuderscheiben 10 sind leicht lösbar auf ihren Wellen angeordnet, so daß sie auf einfache Weise bei Bedarf gegen andere bzw. anders ausgebildete Schleuderscheiben auszutauschen sind.

Zwischen den vier einzelnen Trichterspitzen 7 sind die dachförmigen Teile 4 und 5 angeordnet. Das mittlere dachförmige Teil 4 erstreckt sich wesentlich weiter nach oben als die beiden äußeren dachförmigen Teile 5. Der mittlere dachförmige Teil 4 erstreckt sich annähernd bis zu dem Behälterrand 13. Somit erstreckt sich also der obere Teil des mittleren dachförmigen Teiles 4 bis zu dem oberen Bereich der schräg nach oben verlaufenden Vorderwand 14 bzw. Rückwand 15 des Vorratsbehälters 2. Die Seitenlänge A des mittleren dachförmigen Teiles 4 weist zumindest die eineinhalbfache Seitenlänge B der äußeren dachförmigen Teile 5 auf. Weiterhin entspricht die Seitenlänge A des inneren dachförmigen Teiles 4 der Seitenlänge G der beiden äußeren schrägen Seitenwände 16 des Vorratsbehälters 2.

Durch diese Ausbildung der Trichterspitzen 7 und des Vorratsbehälters 1 ergibt sich ein Vorratsbehälter, der zwei Hälften aufweist, die seitlich der Mittellängsachse 17 des Vorratsbehälters 2 gelegen sind. Diese beiden seitlich der Mittellängsachse 17 des Vorratsbehälters 2 gelegenen Behälterhälften 18 und 19 sind in bezug auf die Mittellängsachse 17 spiegelbildlich ausgebildet. Weiterhin sind jeweils die beiden seitlich der Mittellängsachse 17 gelegenen Behälterhälften 18 und 19 gelegenen Trichterspitzen 7 zu der Mittellängsachse 20 der Behälterhälften 18 bzw. 19 ebenfalls spiegelbildlich.

Hierdurch ergibt sich eine doppelte Spiegelbildlichkeit des Vorratsbehälters 2, die in Verbindung mit dem den Vorratsbehälter 2 in zwei Behälterhälften 18 und 19 teilenden dachförmigen Mittelteil 4 eine gute Überwachungsmöglichkeit der Gleichmäßigkeit der Ausbringmenge bei allen Schleuderscheiben 10 gewährleistet.

Somit sind also die Behälterhälften 18 und 19 zueinander spiegelbildlich und außerdem noch die einzelnen Trichterspitzen 7 zueinander bzw. die Behälterhälften 18 und 19 in sich spiegelbildlich. Des weiteren sind die äußeren Trichterspitzen 7 jeweils zueinander spiegelbildlich, während auch die beiden inneren Trichterspitzen 7 ebenfalls zueinander spiegelbildlich sind. Des weiteren ist die Neigung der Seitenwände 16 gleich der Neigung der Wände des mittleren dachförmigen Mittelteiles 4, während die Neigungen der Wände der äußeren dachförmigen Teile 5 ebenfalls gleich ist. Somit ergibt sich ein in allen Teilen symmetrischer Vorratsbehälter 2.

Auf den Vorratsbehälter 2 ist ein aus Verlängerungsstücken bestehender Aufsatzbehälter 21 anzuordnen, der mit strichpunktierten Linien dargestellt ist. Die Behälterwände 22 des Aufsatzbehälters 21 verlaufen derart von unten schräg nach oben außen, daß sie in gleicher Richtung wie die Wände des trichterförmigen Vorratsbehälters 2 geneigt verlaufen. Die Behälterwände 22 des Aufsatzbehälters 21 verlaufen somit etwa unter der gleichen Neigung wie die des Vorratsbehälters 2. Im übrigen weist der Aufsatzbehälter 21 in seinem obersten Bereich eine Breite von 3 m auf.

## Patentansprüche

1. Maschine zum Ausbringen von körnigem Material, die mit einem Vorratsbehälter (2) ausgestattet ist, dessen Behälterwände sich zumindest teilweise trichterförmig nach unten erstrecken und vier Trichterspitzen (7) bilden, von wo aus das Material einer Verteileinrichtung zugeführt wird, wobei die Trichterspitzen (7) jeweils durch dachförmige Behälterwände gebildet werden, wobei die beiden seitlich der Mittellängsachse (17) des Vorratsbehälters (2) gelegenen Teile des Vorratsbehälters (2) in bezug der Mittellängsachse (17) spiegelbildlich und weiterhin jeweils die beiden seitlich der Mittellängsachse gelegenen Trichterspitzen (7) zu der Mittellängsachse der Behälterhälften (20) jeweils ebenfalls spiegelbildlich sind, und wobei zwischen den vier einzelnen Trichterspitzen (7) des Vorratsbehälters (2) dachförmige Teile (4, 5) angeordnet sind, wobei das mittlere dachförmige Teil (4) sich weiter nach oben erstreckt als die beiden äußeren dachförmigen Teile (5), dadurch gekennzeichnet, daß der mittlere dachförmige Teil (4) oder eine an den mittleren dachförmigen Teil (4) sich anschließende Trennwand sich zumindest annähernd bis zu dem Behälterrand erstreckt.

2. Maschine nach Anspruch 1, dadurch gekennzeichnet, daß zwischen den vier einzelnen Trichterspitzen (7) des Vorratsbehälters (2) dachförmige Teile (4, 5) angeordnet sind, wobei das mittlere dachförmige Teil (4) sich weiter nach oben erstreckt als die beiden äußeren dachförmigen Teile (5).

3. Maschine nach Anspruch 2, dadurch gekennzeichnet, daß die Seitenlänge (A) des inneren dachförmigen Teiles (4) der Seitenlänge (G) der beiden äußeren schrägen Seitenwände (16) des Vorratsbehälters (2) entspricht.

4. Maschine nach einem der Ansprüche 1 bis 3, wobei sich an den oberen Rand des Vorratsbehälters ein aus Verlängerungsstücken bestehender Aufsatzbehälter anschließt, dessen Behälterwände geneigt verlaufen, dadurch gekennzeichnet, daß die Behälterwände (22) des Aufsatzbehälters (21) derart von unten schräg nach oben außen verlaufen, daß sie in gleicher Richtung wie die Wände des trichterförmigen Vorratsbehälters (2) geneigt verlaufen.

5. Maschine nach Anspruch 4, dadurch gekennzeichnet, daß die Behälterwände (22) des Aufsatzbehälters (21) etwa unter der gleichen Neigung wie die des Vorratsbehälters (2) schräg nach oben außen verlaufen.

6. Maschine nach Anspruch 4, dadurch gekennzeichnet, daß der Aufsatzbehälter (21) in seinem obersten Bereich eine Breite von 3 m aufweist.

## Claims

1. Machine for distributing granular material, which is provided with a hopper (2), the hopper walls extending downwardly, at least partially in a funnel-shaped manner, and forming four funnel points, whence the material is supplied to a distributing means, the funnel points (7) being each formed by roof-shaped hopper walls, the two portions of the hopper (2), which are situated laterally of the central longitudinal axis (17) of the hopper (2), being in mirror-image form in respect of the central longitudinal axis (17), and, moreover, the two respective funnel points (7), which are situated laterally of the central longitudinal axis, being likewise in mirror image form relative to the central longitudinal axis (20) of the hopper halves, and wherein roof-shaped portions (4, 5) are disposed between the four individual funnel points (7) of the hopper (2), the central, roof-shaped portion (4) extending further upwardly than the two outer roof-shaped portions (5), characterised in that the central roof-shaped portion (4), or a dividing wall in communication with the central roof-shaped portion (4), extends at least approximately to the hopper edge.

2. Machine according to claim 1, characterised in that roof-shaped portions (4, 5) are disposed between the four individual funnel points (7) of the hopper (2), the central roof-shaped portion (4) extending further upwardly than the two outer roof-shaped portions (5).

3. Machine according to claim 2, characterised in that the lateral length (A) of the inner roof-shaped portion (4) corresponds to the lateral length (G) of the two outer inclined lateral walls (16) of the hopper (2).

4. Machine according to one of claims 1 to 3, wherein a container attachment, including extension pieces, is in communication with the upper edge of the hopper, the container walls extending in an inclined manner, characterised in that the container walls (22) of the container attachment (21) extend inclinedly upwardly and outwardly from below in such a manner that they slope in the same direction as the walls of the funnel-shaped hopper (2).

5. Machine according to claim 4, characterised in that the container walls (22) of the container attachment (21) extend inclinedly upwardly and outwardly substantially at the same inclination as that of the hopper (2).

6. Machine according to claim 4, characterised in that the container attachment (21) has a width of 3 m in its uppermost region.

**Revendications**

1. Epandeur de granulés comportant une trémie (2) dont les parois sont au moins partiellement dirigées en entonnoir vers le bas et forment quatre pointes d'entonnoir (7) par lesquelles les granulés alimentent un dispositif de distribution, les pointes d'entonnoir (7) étant formées respective-ment par les parois en forme de toit de la trémie, les deux parties de la trémie (2) situées latéralement par rapport à l'axe longitudinal médian (17) de la trémie (2) sont symétriques planes par rapport à cet axe longitudinal médian (17) et, en outre, chaque fois les deux pointes d'entonnoir (7) situées latéralement par rapport à l'axe longitudinal médian sont également symétriques planes par rapport à l'axe longitudinal médian des moitiés de trémie (20) et entre les quatre pointes d'entonnoir (7) distinctes de la trémie (2) on a des pièces (4, 5) en forme de toit, la pièce médiane (4) en forme de toit remontant plus haut que les deux parties extérieures (5) en forme de toit, épandeur caractérisé en ce que la partie médiane (4) en forme de toit ou une cloison reliée à la partie médiane en forme de toit (4), remonte au moins approximativement jusqu'au bord de la trémie.

2. Epandeur selon la revendication 1, caractérisé par des parties en forme de toit (4, 5) prévues entre les quatre pointes d'entonnoir (7) distinctes de la trémie (2), la partie médiane (4) en forme de toit remontant plus haut que les deux parties extérieures (5) en forme de toit.

3. Epandeur selon la revendication 2, caractérisé en ce que la longueur latérale (A) de la partie médiane (4) en forme de toit correspond à la longueur latérale (G) des deux parois latérales inclinées (16), extérieures, de la trémie (2).

4. Epandeur selon l'une des revendications 1 à 3, le bord supérieur de la trémie recevant une rehausse de trémie formée de pièces de prolongement et dont les parois sont inclinées, épandeur caractérisé en ce que les parois (22) de la rehausse de trémie (21) sont inclinées vers le haut et vers l'extérieur dans la même direction que les parois de la trémie (2).

5. Epandeur selon la revendication 4, caractérisé en ce que les parois (22) de la rehausse de trémie (21) sont inclinées vers le haut et vers l'extérieur sensiblement suivant la même inclinaison que la trémie (2).

6. Epandeur selon la revendication 4, caractérisé en ce que la rehausse de trémie (21) présente, dans sa zone plus haute, une largeur de trois mètres.

FIG.1

# FIG. 2